# Europäisches Patentamt
# European Patent Office
# Office européen des brevets

(19)

(11) Publication number: **0 105 387**
**B1**

(12)

# EUROPEAN PATENT SPECIFICATION

(45) Date of publication of patent specification: **25.03.87**

(21) Application number: **83109153.3**

(22) Date of filing: **16.09.83**

(51) Int. Cl.⁴: **F 16 B 2/00,** F 16 B 7/20,
F 21 V 17/06, F 21 V 19/04,
F 21 V 21/00, H 02 B 1/04

(54) Snap-action fastening device for control and/or signalling units.

(30) Priority: **01.10.82 IT 2306982 u**

(43) Date of publication of application:
**18.04.84 Bulletin 84/16**

(45) Publication of the grant of the patent:
**25.03.87 Bulletin 87/13**

(84) Designated Contracting States:
**AT BE CH DE FR GB IT LI NL SE**

(56) References cited:
**EP-A-0 074 427**
**CH-A- 522 965**
**DE-A-2 333 327**
**DE-A-2 816 450**
**DE-B-2 440 366**
**FR-A-2 208 091**
**FR-A-2 301 112**
**GB-A-2 000 912**
**IT-A- 21 111**

(73) Proprietor: **CGE- COMPAGNIA GENERALE ELETTROMECCANICA S.p.A.**
**Via Tortona 27**
**I-20144 Milan (IT)**

(72) Inventor: **Falchi, Fiorino**
**via San Giorgio 19/3**
**I-10090 Sangano (To) (IT)**

(74) Representative: **Michelotti, Giuliano**
**c/o SAIC BREVETTI S.r.l. Viale Bianca Maria 15**
**I-20122 Milano (IT)**

Courier Press, Leamington Spa, England.

## Description

The present invention relates to a snap-action fastening device for control and/or signalling units.

Among the systems known in the art, for securing on a panel board control and/or signalling units, such as switches and warning and/or signalling lights, those generally used consist of securing the operating unit of the control unit to the panel board by means of a threaded ring nut: the ring nut is threaded frontally on the body of the control unit which is previously slipped into a proper seating of the panel board, in such a manner as to secure it to the latter.

Another system commonly used for securing to the panel a control unit, consists of the use of securing and shimming screws which operate between the panel and the body of the control unit housed into a proper seat of said panel.

However the above systems have some important drawbacks: for example, the first type of connection cannot prevent that a voluntary or fortuitous unscrewing of the ring nut from the outer side of the panel shall cause the resulting desactivation of the control unit; secondly, the system with shimming screws has the disadvantage of making very troublesome and difficult the centering of the control unit on the panel.

With the purpose of solving said troubles, the IT—U—21111—B/80 in the name of the same applicant, has proposed the use of a control unit with snap-action group having a threaded ring nut; said fastening group consists substantially of an operating unit at its rear portion with a shaped portion which can be introduced as a bayonet into a threaded sleeve, equipped with a ring nut, which latter is the intermediate element for securing the control unit to the panel (by means of the ring nut) and the element for securing the electric elements to said operating unit through proper securing means built in said sleeve. The operation for securing the control unit to the panel of a board or of an instrument is carried out by means of a proper tool acting on the ring nut of the threaded sleeve.

One of the most recent solutions of this problem is disclosed in the EP—A—74427, published on 23.3.1983. Such an approach consists of a housing (2) for an actuating means having an externally threaded shank (11) cooperating with an internally threaded ring nut (5) and having an extension (12) provided with slots (13, 14, 15) engaging a U-bent spring (32) inserted in a coupling plate (7) to secure an apparatus (8) against the housing (2). Such a solution works well enough but has two main disadvantages:

a) to assemble or disassemble the housing (2) with respect to a board (1) it is necessary to insert or extract the housing (2) into or out a hole (49) of the board (1), unscrewing completely the ring nut (5) from the shank (11), risking to loose said ring nut,

b) the securing of the apparatus (8) and the coupling plate (7) to the housing (2), due exclusively to the engagement between the two legs (33, 34) of the U-bent spring (32) and the slots (13, 15) of the housing (2) is not very firm, allowing easily a misengagement between the legs of the U-bent spring and one of the slots of the housing.

The purpose of the present invention is that of improving the securing system illustrated in the above mentioned IT—U—21111—B/80, permitting in particular to simplify and to accelerate the operations for mounting the operating unit of the control unit to the panel, however preserving and improving the special effects and advantages of the snap-action fastening system.

The above and other purposes and advantages are obtained with a snap-action fastening device for control and/or signalling unit comprising a sleeve with a shape corresponding to and suitable for cooperating with a cantilevered rear portion of an operating unit equipped with shaped surface grooves, said sleeve having the shape complementary to that of said rear portion of the operating unit slipped as a bayonet into said sleeve, the internal surface of the latter being provided with ridges making part of said bayonet coupling, the outer surface of the said sleeve being partially threaded; a ring nut threaded to the outer surface of said sleeve; means for securing electrical elements of the control and/or signalling unit to said sleeve, characterized in that said securing means comprise a separated annular element interposed between said sleeve and said electrical element, consisting of a snap-action coupling flange which has a stationary part of frame, having shape corresponding to that of said sleeve, into which is slidably installed, on the plane of the said frame, a guillotine element, said snap-action means being formed by coupling teeth, integrally mounted with said guillotine element, movable from a retracted position wherein said annular element is disengaged from said sleeve, to an operative position wherein said coupling teeth enter some stops means provided on said sleeve, spring means being provided for urging said snap-action engaging means towards said operating position.

According to a preferred embodiment of the present invention said stop means consist of shaped projections provided on a not threaded rear portion of said sleeve, said shape projections engaging said teeth of the guillotine element of the coupling flange.

According to a still more preferred embodiment of the present invention, the front surface of the teeth of the guillotine and that of the front edge of the sleeve and of its projections, interferring with the said teeth, are slanting with respect to a transversal plane of the coupling flange and of the sleeve, respectively.

According to a further preferred embodiment of the present invention the stationary portion or frame of said coupling flange is moreover provided with a rib suitable for guiding, through the engagement into a corresponding groove provided on the rear portion of sleeve, the entering of said flange on the sleeve, with an internal peripheral groove for guiding the motion of the guillotine element, and moreover with a threaded seat which represents the securing releasable means of the electrical element to said flange.

According to still further preferred embodiment of the present invention the outer surface of the cantilevered portion of said operating unit, corresponding to the grooves for the engagement with the internal projections of the sleeve, is equipped with projecting teeth for mounting in position said ridges into said grooves.

The above and other characteristics are illustrated in the following specification with reference to the enclosed drawings which illustrate a preferred embodiment of the fastening device given as a not limitative example of the present invention.

Fig. 1 is an exploded and partial section view of the control unit equipped with the fastening device in accordance with the present invention;

Fig. 2 is a front detailed view of the coupling flange of the device of Fig. 1;

Fig. 3 shows the detail of the engagement between the operating unit and sleeve; and

Fig. 4 shows in transverse section the details of the flange of Fig. 2 coupled on the sleeve of the fastening device in accordance with the present invention.

Now referring to the above figures, the instant control unit comprises a snap-action fastening device consisting of a sleeve 1 with outer surface partially threaded, a threaded ring nut 2 which can be threaded on the threaded outer surface of the sleeve 1 and an annular element or coupling flange 3. Moreover, the control unit comprises the operating unit 4, secured to the panel board 5 through said fastening device and a gasket 6, and the electric unit 7.

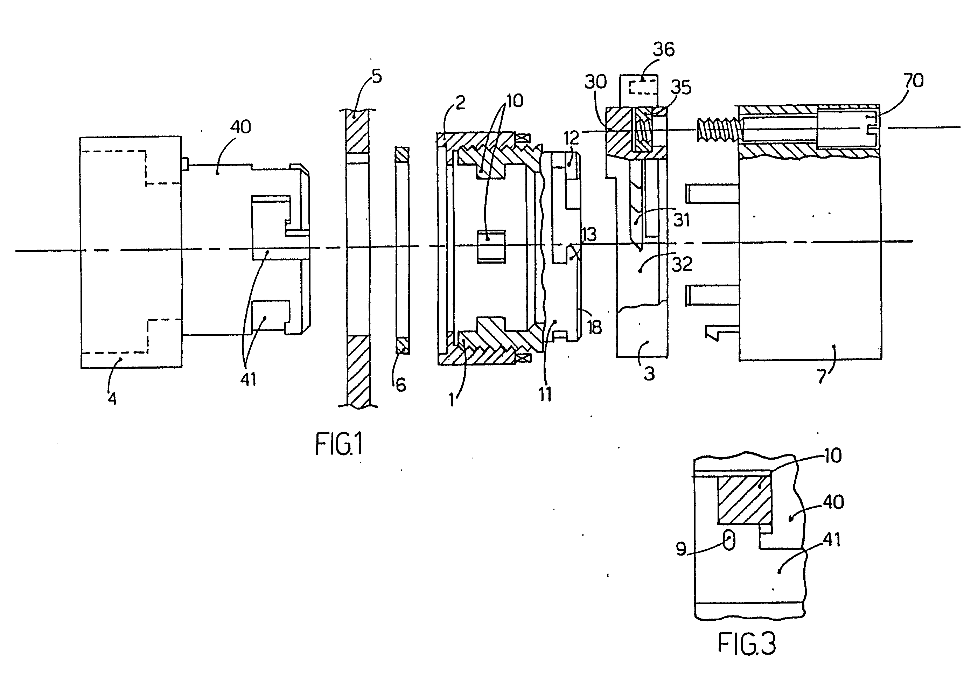

The operating unit 4, in which a movable pushbutton (dotted line in Fig. 1), is installed, is featured by a cantilevered rear portion 40 cooperating with said fastener device, which can be introduced as a bayonet in a conventional manner firstly through a suitable hole in the panel 5, and secondly into the sleeve 1 of the fastening device.

Advantageously, the outer surface the cantilevered portion 40 of the operating unit 4 is featured by L-shaped grooves 41 which slidingly engage proper ridges 10 integral with the internal surface of the sleeve 1: the relative rotation of the operating unit 4 with bayonet coupled portion 40 into the sleeve 1 causing the motion of the ridges 10 into the grooves 41, and a resulting engagement between the parts.

The final securing of the unit 4 to the panel 5 is attained, with the gasket 6 slipped onto the rear portion 40, by screwing the ring nut 2 on the sleeve 1 until this tighten against the corresponding surface of the panel 5.

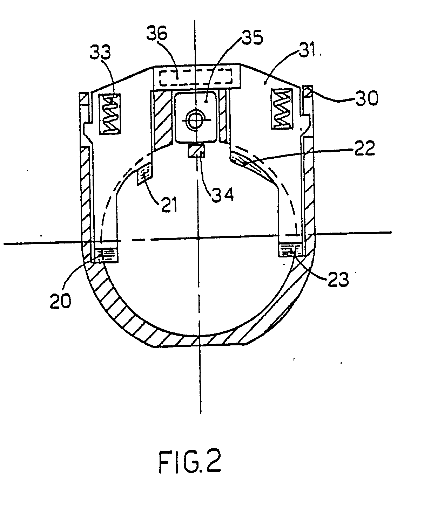

According to the improvements of this invention, the mutual connection between the operating unit 4 and the electric element 7 is obtained through a coupling flange 3 (see Fig. 2) consisting of a frame 30, shaped substantially as the not threaded rear portion 11 of the sleeve 1, into which slides on the plane of said frame, a guillotine element 31; for the purpose, the frame 30, representing the stationary portion of the coupling flange 3, is featured onto the inner profile by a substantially peripheral groove 32 (Fig. 1) which represents a guide to the motion of the guillotine 31 against the action of the return spring 33 properly mounted into said frame 30.

The latter has on its upper portion a guide rib 34 and a seat 35 for the engagement of conventional means (screws or the like) suitable for securing the electric element 7 of the control unit to the coupling flange 3.

The guillotine element 31 consists substantially of a U-member closed on the frame 30 and having an upper portion 36 extending from the frame 30, on which the guillotine can be rised up manually or by means of a screw driver when it is desired to disengage the flange 3 from the sleeve 1; the profile of the element 31 faced internally the frame 30 is properly shaped in such a manner to engage with a snap-action the rear portion 11 of the sleeve 1. More specifically, said profile is equipped with extending teeth 20, 21, 22 and 23, whose front surface (see Fig. 2) is properly slanting to form a mouth for introducing, against the action of the springs 33, the portion 11 of the sleeve 1 into said flange 3.

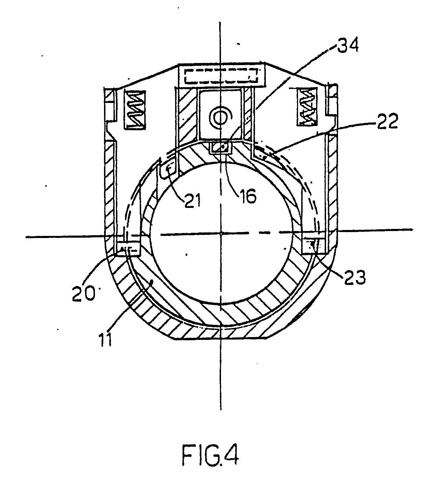

In order to obtain the mutual engagement among said parts, the rear portion 11 (non threaded and uncovered by the ring nut 2) of the sleeve 1 has some suitable projections 12, 13, 14, 15 (the last two not visible) and a groove 16 respectively for the engagement with the teeth 20 to 23 of the guillotine 31, and with the guide rib 34 of the frame 30 of the flange 3 (see Fig. 4).

The front profile 18 of the portion 11 of the sleeve 1, including the projections 12 and 15, that is the portion of the sleeve entering first in contact with the coupling flange 3, has some properly slanting walls in correspondence with the coupling surfaces of the teeth of the guillotine, such as to promote the engagement. The coupling is obtained by pressing the guillotine 31 against the portion 11 of the sleeve 1: in this manner the guillotine 31 is raised up, a motion which is facilitated by the slanting of the above described interacting surface, against the action of the springs 33; once the lifting up is completed, the teeth of the guillotine overcome the front shaped profile of the portion of sleeve 11 and of the projection 12 to 15, and they engage them.

Moreover, the engagement of the rib 34 of the flange 3 into the groove 16 of the portion of sleeve 11, allows a correct mutual positioning of the parts (Fig. 4). As has been illustrated in Fig. 3, on the outer surface of the operating unit portion 40 corresponding to each groove 41, three in number in the illustrated example, a projecting small tooth 9 is provided, having substantially the object of preventing the return motion of the ridges 10 into said guide elements 41, thus ensuring a first provisional engagement of the sleeve 1 onto the operating unit portion 40.

This is particularly useful for preventing in the course of tightening the ring nut 2 a possible motion and therefore the possible disengagement of the operating unit portion 40 from the sleeve 1.

As stated, the assembling of the control unit is completed by securing the electric element 7 to the coupling flange 3, this operation being possible both before and after the engagement of the said flange 3 to the sleeve 1.

In the example of Fig. 1, the securing of the electric element 7 to the flange 3 is carried out by means of a screw 70 threaded into the threaded seat 35 of said flange and/or through other not illustrated conventional means.

**Claims**

1. A snap-action fastening device for control and/or signalling unit comprising a sleeve (1) with a shape corresponding to and suitable for cooperating with a cantilevered rear portion (40) of an operating unit (4) equipped with shaped surface grooves (41), said sleeve having a shape complementary to that of said rear portion of the operating unit slipped as a bayonet into said sleeve, the internal surface of the latter being provided with ridges (10) making part of said bayonet coupling, the outer surface of the said sleeve being partially threaded; a ring nut (2) threaded to the outer surface of said sleeve; means for securing electrical elements (7) of the control and/or signalling unit to said sleeve, characterized in that said securing means comprise a separated annular element interposed between said sleeve (1) and said electrical element (7), consisting of a snap-action coupling flange (3) which has a stationary part of frame (30), having shape corresponding to that of the said sleeve, into which is slidably installed, on the plane of the said frame, a guillotine element (31), said snap-action means being formed by coupling teeth (20, 21, 22, 23), integrally mounted with said guillotine element, movable from a retracted position wherein said annular element is disengaged from said sleeve, to an operative position wherein said coupling teeth enter some stop means provided on said sleeve, spring means (33) being provided for urging said snap-action engaging means toward said operating position.

2. The fastening device of claim 1, characterized in that said stop means consist of shaped projection (12, 13, 14, 15) provided on a not threaded rear portion (11) of said sleeve, said shaped projections engaging said teeth of the guillotine element of the coupling flange.

3. The fastening0device of claims 1 and 2, characterized in that the front surface of the teeth of the guillotine and that of the front edge of the sleeve and of its projections interferring with the said teeth are slanting with respect to a transversal plane of the coupling flange and of the sleeve, respectively.

4. The fastening device of previous claims, characterized in that the stationary portion or frame of said coupling flange is moreover provided with a rib (34) suitable for guiding, through the engagement into a corresponding groove (16) provided on the portion of sleeve (11), the entering of said flange on the sleeve, (1), an internal peripheral groove (32) for guiding the motion of the guillotine element, and moreover a threaded seat (35) which represents the securing releasable means of the electrical element (7) to said flange (3).

5. The fastening device of claim 1, characterized in that the outer surface of the cantilevered portion (40) of said operating unit (4), corresponding to the grooves (41) for the engagement with the internal projections (10) of the sleeve (1), is equipped with projecting teeth (9) for mounting in position said ridges into said grooves.

**Revendications**

1. Un dispositif de fixation encliquetable pour un dispositif de commande et/ou de signalisation comprenant une douille (1) ayant une forme qui correspond à une partie arrière en porte-à-faux (40) d'une section de manoeuvre (4) munie de rainures de surface (41) de forme appropriée, la forme de la douille étant prévue pour permettre la coopération de la douille avec la partie arrière de la section de manoeuvre, et la douille ayant une forme complémentaire de celle de la partie arrière de la section de manoeuvre qui est glissée dans la douille à la manière d'une baïonnette, la surface intérieure de la douille comportant des nervures (10) qui font partie de l'accomplement à baïonnette, et la surface extérieure de la douille étant partiellement filetée; un écrou (2) qui est vissé sur la surface extérieure de la douille; et des moyens destinés à fixer sur la douille des éléments électriques (7) du dispositif de commande et/ou de signalisation, caractérisé en ce que les moyens de fixation comprennent un élément annulaire séparé intercalé entre la douille (1) et l'élément électrique (7), consistant en une bague d'accouplement encliquetable (3) qui comporte une partie ou structure fixe (30) ayant une forme qui correspond à celle de la douille, dans laquelle un élément à guillotine (31) est installé de façon coulissante, dans le plan de la structure fixe, les moyens encliquetables étant formés par les dents d'accouplement (20, 21, 22, 23), formées en une seule pièce avec l'élément à guillotine et pouvant se déplacer depuis une position rétractée dans laquelle l'élément annulaire est dégagé de la douille, jusqu'à une position active dans laquelle les dents d'accouplement pénètrent dans des moyens d'arrêt formés sur la douille, des moyens à ressort (33) étant prévus pour solliciter les moyens d'accouplement encliquetables vers la position active.

2. Le dispositif de fixation de la revendication 1, caractérisé en ce que les moyens d'arrêt consistent en une saillie de forme déterminée (12, 13, 14, 15) formée sur une partie arrière non filetée (11) de la douille, et ces saillies de forme déterminée viennent en contact avec les dents de l'élément à guillotine de la bague d'accouplement.

3. Le dispositif de fixation des revendications 1 et 2, caractérisé en ce que la surface avant des dents de l'élément à guillotine et celle du bord avant de la douille et de ses saillies venant en contact avec les dents sont respectivement inclinées par rapport à un plan transversal de la bague d'accouplement et de la douille.

4. Le dispositif de fixation des revendications précédentes, caractérisé en ce que la partie ou structure fixe de la bague d'accouplement comporte en outre une nervure (34) qui convient pour guider, par la pénétration dans une rainure correspondante (16) formée sur la partie arrière de la douille (11), l'entrée de la bague dans la douille (1), une rainure périphérique intérieure (32) destinée à guider le mouvement de l'élément à guillotine, et en outre un logement taraudé (35) qui constitue les moyens de fixation libérables de l'élément électrique (7) sur la bague (3).

5. Le dispositif de fixation de la revendication 1, caractérisé en ce que la surface extérieure de la partie en porte-à-faux (40) de la section de manoeuvre (40), correspondant aux rainures (41) destinées à recevoir les saillies internes (10) de la douille (1), est munie de dents en saillie (9) destinées au positionnement des nervures dans les rainures.

**Patentansprüche**

1. Befestigungsvorrichtung mit Schnappwirkung Kontroll und/oder Signaleinrichtungen, mit einer Buchse (1), deren Form einem auskragenden hinteren Abschnitt (40) einer Betätigungseinheit (4) entspricht und zum Zusammenwirken mit diesem geeignet ist, wobei der Abschnitt (40) mit geformten Oberflächennuten (41) versehen ist, wobei die Buchse eine zum hinteren Abschnitt der Betätigungseinheit komplementäre Form hat, der als ein Bajonett in die Buchse geschoben ist, wobei die Innenseite der letzteren mit Rippen (10) versehen ist, die einen Teil der Bajonettkupplung bilden, und wobei die Außenseite der Buchse zum Teil mit einem Gewinde versehen ist; einer Ringmutter (2), die auf die Außenseite der Buchse aufgeschraubt ist; einer Einrichtung zum Befestigen elektrischer Elemente (7) der Kontroll- und/oder Signaleinrichtung an der Buchse; dadurch gekennzeichnet, daß die Befestigungsvorrichtung ein gesondertes ringförmiges Element aufweist, das zwischen die Buchse (1) und das elektrische Element (7) zwischengeschaltet ist, bestehend aus einem Kupplungsflansch (3) mit Schnappwirkung, der einen stationären Rahmenteil (30) aufweist, dessen Form jener der Buchse entspricht und in welchen in der Rahmenebene gleitverschieblich ein Guillotineelement (31) eingeschoben ist, wobei die Einrichtung mit Schnappwirkung durch einen Kupplungszahn (20, 21, 22, 23) gebildet ist, der einstückig mit dem Guillotineelement ausgebildet ist und aus einer zurückgezogenen Stellung, in welcher das ringförmige Element von der Buchse getrennt ist, in eine Betätigungsstellung verschiebbar ist, in welcher der Kupplungszahn mit an der Buchse vorgesehenen Anschlagmitteln in Eingriff kommt, wobei Federmittel (33) vorgesehen sind, um die Eingriffseinrichtung mit Schnappwirkung gegen die Betätigungsstellung zu drücken.

2. Befestigungsvorrichtung nach Anspruch 1, dadurch gekennzeichnet, daß die Anschlagmittel aus Formvorsprüngen (12, 13, 14, 15) bestehen, die auf dem gewindelosen hinteren Abschnitt (11) der Buchse vorgesehen sind, wobei die Formvorsprünge mit den Zähnen des Guillotineelementes des Kupplungsflansches in Eingriff kommen.

3. Befestigungsvorrichtung nach den Ansprüchen 1 und 2, dadurch gekennzeichnet, daß die Vorderseite der Zähne der Guillotine und jene der Vorderkante der Buchse sowie ihrer Vorsprünge, welche mit den Zähnen in Eingriff kommen, bezüglich einer Querebene des Kupplungsflansches und der Buchse abgeschrägt sind.

4. Befestigungsvorrichtung nach einem der vorhergehenden Ansprüche, dadurch gekennzeichnet, daß der stationäre Teil bzw. Rahmen des Kupplungsflansches überdies mit einer Rippe (34) versehen ist, mit welcher der Eintritt des Flansches in die Buchse (1) über den Eingriff der Rippe in eine entsprechende Nut (16) auf dem Abschnitt (11) der Buchse geführt wird, wobei eine innere Umfangsnut (32) zur Führung der Bewegung des Guillotineelementes und überdies ein Gewindesitz (35) vorgesehen ist, welcher die lösbaren Befestigungsmittel des elektrischen Elementes (7) am Flansch (3) darstellt.

5. Befestigungsvorrichtung nach Anspruch 1, dadurch gekennzeichnet, daß die Außenfläche des auskragenden Abschnittes (40) der Betätigungseinrichtung (4) im Bereich der Nuten (41) für den Eingriff mit den Innenvorsprüngen (10) der Buchse (1) mit vorstehenden Zähnen (9) versehen ist, um die Vorsprünge in ihrer Lage in den Nuten festzulegen.

FIG.1

FIG.3

FIG.2

FIG.4